# EUROPEAN PATENT APPLICATION

(11) **EP 4 765 406 A1**
(43) Date of publication of application: **24.06.2026**
(21) Application number: 25222573.5
(22) Date of filing: 11.12.2025
(51) Int. Cl.: H01M 50/289, H01M 50/284, H01M 50/213, H01M 50/244, H01M 50/367, H01M 50/502, H01M 50/204

(54) **BATTERY PACK, METHOD FOR ASSEMBLING BATTERY PACK, AND ELECTRICAL DEVICE**

(30) Priority: 23.12.2024 CN 202411907851; 12.03.2025 WO PCT/CN2025/082016
(71) Applicant: Eve Energy Co., Ltd., Huizhou, Guangdong 516006 (CN)
(72) Inventor: LIANG, Xianyu, Huizhou, Guangdong, 516006 (CN); LIN, Zheng, Huizhou, Guangdong, 516006 (CN); WEI, Xueqing, Huizhou, Guangdong, 516006 (CN); YAO, Junwei, Huizhou, Guangdong, 516006 (CN); PENG, Yingjie, Huizhou, Guangdong, 516006 (CN); LIU, Pingping, Huizhou, Guangdong, 516006 (CN)
(74) Representative: Herrero & Asociados, S.L.

(57) **Abstract**

A battery pack, a method for assembling the battery pack, and an electrical device are disclosed. The battery pack includes a battery case (100), a battery cell assembly (200), and a BMS (300). The battery case (100) defines a first accommodation cavity (110) and a second accommodation cavity (120). The first accommodation cavity (110) is isolated from the second accommodation cavity (120). The battery cell assembly (200) is arranged in the first accommodation cavity (110) and includes battery cells. The BMS (300) is arranged in the second accommodation cavity (120). When a battery cell experiences thermal runaway and ejects high-temperature and high-pressure gases and particles, and the high-temperature and high-pressure gases and particles will not enter the second accommodation cavity and are prevented from being dispersed to the BMS. In this way, it is ensured that the BMS can operate normally during the thermal runaway of the battery cell.

## Description

### TECHNICAL FIELD

The invention relates to the technical field of batteries, and in particular to a battery pack, a method for assembling the battery pack, and an electrical device.

### BACKGROUND

Electric vehicles have excellent energy-saving and environmental protection effects compared to traditional fuel vehicles and have gained increasing popularity. As a core component of electric vehicles, a battery pack typically includes a battery case, a battery module, and a battery monitoring and management system (BMS). The battery module and the BMS are both mounted in the battery case.

When a battery cell in the battery module experiences thermal runaway, an explosion-proof valve of the battery cell opens and releases high-temperature and high-pressure gases and particles. If the high-temperature and high-pressure gases or particles are dispersed to the BMS, the BMS may be damaged, preventing the BMS from providing a thermal runaway fault signal to passengers, thereby posing a serious safety hazard to the electric vehicle.

Therefore, it is necessary to propose a battery pack, a method for assembling the battery pack, and an electrical device to address the above technical issues.

### SUMMARY

A first objective of the invention is to provide a battery pack, in which the high-temperature and high-pressure gases and particles ejected by a battery cell during thermal runaway will not be dispersed toward the BMS.

To achieve this objective, the following technical solution is adopted.

A battery pack includes a battery case, a battery cell assembly, and a BMS. The battery case defines a first accommodation cavity and a second accommodation cavity. The first accommodation cavity is isolated from the second accommodation cavity. The battery cell assembly is arranged in the first accommodation cavity. The battery cell assembly includes battery cells. The BMS is arranged in the second accommodation cavity.

Optionally, the battery pack further includes a cells contact system (CCS). The CCS includes a frame plate, and the frame plate is sealed in the battery case and partitions the battery case to form the first accommodation cavity and the second accommodation cavity.

Optionally, the battery case includes a case cover and a case body, the case cover is engaged with the case body, the frame plate is arranged in the case body, the first accommodation cavity is located between the frame plate and the case body, and the second accommodation cavity is located between the frame plate and the case cover.

Optionally, an edge of the frame plate is arranged with a sealing member, and the frame plate is sealingly connected with an inner wall of the case body via the sealing member.

Optionally, the sealing member extends along a circumferential direction of the frame plate and is configured in a loop.

Optionally, the sealing member is a sealant.

Optionally, a side of the case cover facing the case body is arranged with a first protruding portion, and the first protruding portion is inserted in the sealing member.

Optionally, the first protruding portion extends along a circumferential direction of the case cover and is configured in a loop.

Optionally, a partition plate is arranged in the case body, and the battery cells are arranged on both sides of the partition plate.

Optionally, a side of each of the battery cells arranged on at least one side of the partition plate facing the partition plate is arranged with a first explosion-proof valve.

Optionally, a first gap is defined between the first explosion-proof valve and the partition plate, a second gap is defined between each of the battery cells and the inner wall of the case body, each of two sides of the partition plate is spaced apart from the inner wall of the case body, and the first gap and the second gap are communicated to each other and cooperatively form an exhaust channel.

Optionally, the case body is arranged with a fifth explosion-proof valve, and the exhaust channel is communicated to the fifth explosion-proof valve.

Optionally, an axis of each of the battery cells arranged on one side of the partition plate is non-parallel to an axis of each of the battery cells arranged on the other side of the partition plate.

A second objective of the invention is to provide a method for assembling the battery pack, which is relatively simple and has effects of reducing assembly difficulty and improving assembly efficiency.

To achieve this objective, the following technical solution is adopted.

A method for assembling the battery pack for assembling the aforementioned battery pack includes: S1: providing the frame plate, wherein the frame plate defines a first region and a second region along a first direction; and fixing a first battery cell and a second battery cell in the first region along a second direction, wherein each of an axis of the first battery cell and an axis of the second battery cell is parallel to the first direction, and the first direction is perpendicular to the second direction; S2: welding an electrode of the first battery cell facing the second region to a first connection piece, and welding an electrode of the second battery cell facing the second region to the first connection piece; S3: fixing a fourth battery cell in the second region, wherein an axis of the fourth battery cell is parallel to the second direction, and the fourth battery cell faces to the first connection piece; and S4: mounting the frame plate in the case body, wherein the first region and the second region are located on two sides of the partition plate, respectively.

A third objective of the invention is to provide an electrical device, in which a battery pack used has high safety.

To achieve this objective, the following technical solution is adopted.

An electrical device includes the aforementioned battery pack.

Advantageous effects of the invention are as follows.

In the battery pack provided by the invention, an internal space of the battery case is divided to the first accommodation cavity and the second accommodation cavity, which are isolated from each other. The battery cell assembly is arranged in the first accommodation cavity, and the BMS is arranged in the second accommodation cavity. When a battery cell experiences thermal runaway and ejects high-temperature and high-pressure gases and particles, and the high-temperature and high-pressure gases and particles will not enter the second accommodation cavity and are prevented from being dispersed to the BMS. In this way, it is ensured that the BMS can operate normally during the thermal runaway of the battery cell.

### BRIEF DESCRIPTION OF THE DRAWINGS

FIG. 1 is an exploded view of a battery pack according to embodiments of the invention.
FIG. 2 is a structural view of the battery pack according to embodiments of the invention.
FIG. 3 is a cross-sectional view along F-F in FIG. 2.
FIG. 4 is an enlarged view of a portion A in FIG. 3.
FIG. 5 is a first structural view of a case body and a battery cell assembly according to embodiments of the invention.
FIG. 6 is a second structural view of the case body and the battery cell assembly according to embodiments of the invention.
FIG. 7 is a first structural view of a frame plate and the battery cell assembly according to embodiments of the invention.
FIG. 8 is a structural view of the frame plate according to embodiments of the invention.
FIG. 9 is a second structural view of the frame plate and the battery cell assembly according to embodiments of the invention.

Reference Numerals in the drawings are as follows.

100-battery case; 110-first accommodation cavity; 120-second accommodation cavity; 130-case cover; 131-first protruding portion; 132-first through hole; 133-second through hole; 140-case body; 141-partition plate; 142-fifth explosion-proof valve; 200-battery cell assembly; 210-first battery cell; 220-second battery cell; 230-third battery cell; 240-fourth battery cell; 251-first explosion-proof valve; 252-second explosion-proof valve; 253-third explosion-proof valve; 254-fourth explosion-proof valve; 300-BMS; 400-CCS; 410-frame plate; 411-first region; 412-second region; 413-second protruding portion; 500-sealing member; 610-first gap; 620-second gap; 710-first connection piece; 720-second connection piece; 730-third connection piece; 740-fourth connection piece; 750-fifth connection piece; 810-first conductive member; 820-second conductive member; 830-first sealing cover; 840-second sealing cover; D1-first direction; D2-second direction.

### DETAILED DESCRIPTION

The following describes the embodiments of the invention in detail with reference to the accompanying drawings. It should be understood that the specific embodiments described herein are only used to explain the invention and not to limit it. Additionally, for ease of description, the drawings only show parts related to the invention and not the entire structure.

In the description of the invention, unless otherwise specified, terms such as "connected", "linked", and "fixed" should be interpreted broadly. For example, they may refer to fixed connections, detachable connections, or integrated connections; they may also refer to mechanical connections, electrical connections, direct connections, or indirect connections through an intermediate medium, or the internal connection or interaction between two elements. For those skilled in the art, the specific meanings of the above terms in the invention can be understood based on the specific context.

In the invention, unless otherwise specified, a first feature being "on" or "under" a second feature may include direct contact between the first feature and the second feature, or indirect contact through other features between them. Moreover, the first feature being "above", "over", or "on top of" the second feature includes the first feature being directly above or obliquely above the second feature, or simply indicating that the first feature is at a higher horizontal level than the second feature. The first feature being "below", "under", or "beneath" the second feature includes the first feature being directly below or obliquely below the second feature, or simply indicating that the first feature is at a lower horizontal level than the second feature.

In the description of the embodiments of the invention, directional terms such as "up", "down", and "right" are based on the orientation or positional relationships shown in the drawings and are only for ease of description and simplification of the operation, rather than indicating or implying that the referred device or element must have a specific orientation or be constructed and operated in a specific orientation. Therefore, these terms should not be construed as limiting the invention. Additionally, terms such as "first" and "second" are only used for descriptive purposes and do not have any special meanings.

The invention provides a battery pack, in which high-temperature and high-pressure gases and particles ejected by a battery cell during thermal runaway will not be dispersed to the BMS.

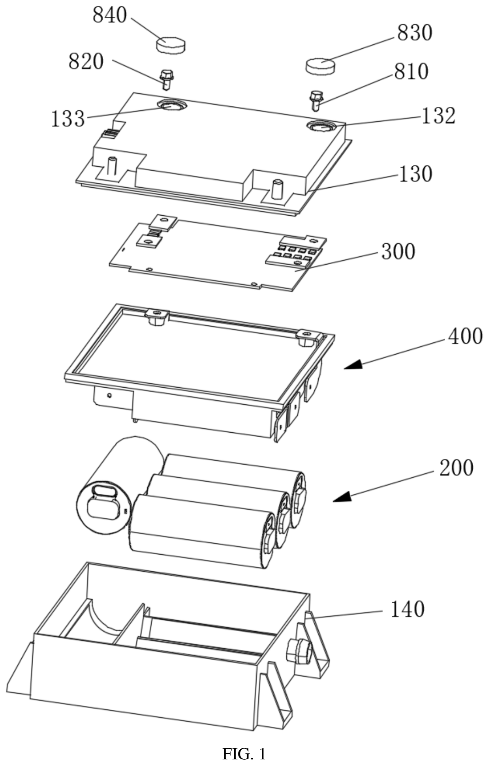

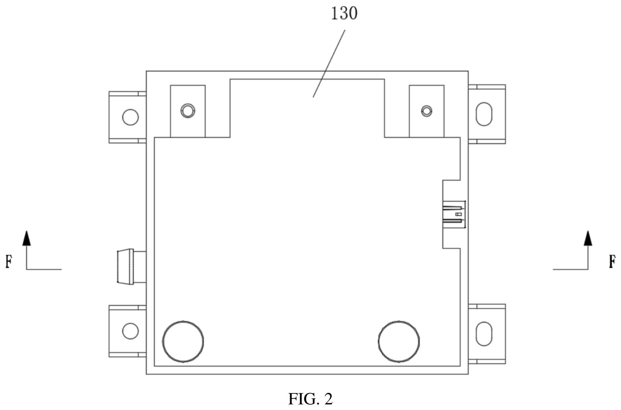

Specifically, as shown in FIGS. 1-3, the battery pack includes a battery case 100, a battery cell assembly 200, and a BMS 300. The battery case 100 defines a first accommodation cavity 110 and a second accommodation cavity 120. The first accommodation cavity 110 and the second accommodation cavity 120 are isolated from each other. The battery cell assembly 200 is arranged in the first accommodation cavity 110 and includes battery cells. The BMS 300 is arranged in the second accommodation cavity 120.

In the battery pack, an internal space of the battery case 100 is divided to the first accommodation cavity 110 and the second accommodation cavity 120, which are isolated from each other. The battery cell assembly 200 is arranged in the first accommodation cavity 110, and the BMS 300 is arranged in the second accommodation cavity 120. When a battery cell experiences thermal runaway and ejects high-temperature and high-pressure gases and particles (hereinafter referred to as high-temperature media), the high-temperature media will not enter the second accommodation cavity 120, thereby preventing the high-temperature media from being dispersed to the BMS 300. In this way, it is ensured that the BMS 300 can operate normally during the thermal runaway of the battery cell.

In some embodiments, the battery pack further includes cells contact system (CCS) 400. The CCS 400 includes a frame plate 410. The frame plate 410 is sealed in the battery case 100 and partitions the battery base 100 to form the first accommodation cavity 110 and the second accommodation cavity 120. This configuration utilizes the frame plate 410 of the CCS 400 to form the first accommodation cavity 110 and second accommodation cavity 120 isolated from the first accommodation cavity 110 in the battery case 100 without a need for additional partitions or barriers, making full use of the internal space of the battery case 100 and facilitating improving energy density of the battery pack.

In some embodiments, the battery case 100 includes a case cover 130 and a case body 140. The case cover 130 is engaged with the case body 140. The frame plate 410 is arranged in the case body 140, and an edge of the frame plate 410 is arranged with a sealing member 500. The sealing member 500 extends along a circumferential direction of the frame plate 410 and is configured in a loop. The frame plate 410 is sealingly connected with an inner wall of the case body 140 via the sealing member 500, achieving a sealed connection between the frame plate 410 and the case body 140, thereby isolating the battery cell assembly 200 from the BMS 300 and preventing high-temperature media ejected by the battery cells in the first accommodation cavity 110 from entering the second accommodation cavity 120 and affecting the BMS 300.

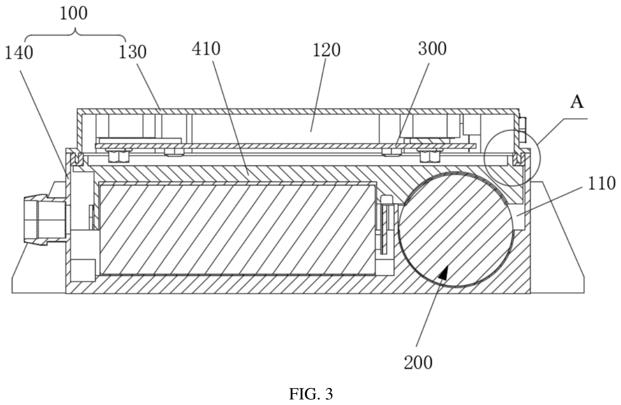

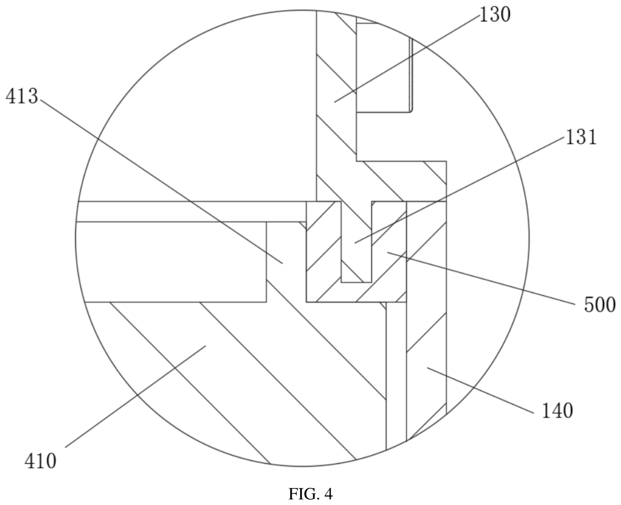

In some embodiments, as shown in FIGS. 3-4, an edge of the frame plate 410 facing the case cover 130 is arranged with a second protruding portion 413. The second protruding portion 413 extends along the circumferential direction of the frame plate 410 and is configured in a loop. The sealing member 500 is filled between the second protruding portion 413 and the inner wall of the case body 140 to improve reliability of the sealing between the frame plate 410 and the case body 140.

In some embodiments, the BMS 300 is fixed on a side of the case cover 130 facing the frame plate 410 to improve an integration level of the battery pack and further facilitate enhancing the energy density of the battery pack.

In this embodiment, the sealing member 500 is a sealant, which not only achieves the sealing between the frame plate 410 and the case body 140 but also bonds the frame plate 410 and the case body 140 to an integrated structure. In other embodiments, the sealing member 500 may also be a sealing ring. Additionally, in other embodiments, the sealing member 500 may also be sandwiched between a side wall of the frame plate 410 and the inner wall of the case body 140.

In some embodiments, a side of the case cover 130 facing the case body 140 is arranged with a first protruding portion 131. The first protruding portion 131 extends along a circumferential direction of the case cover 130 and is configured in a loop. The first protruding portion 131 is inserted in the sealing member 500 to achieve the sealing between the frame plate 410 and the case cover 130. By adding a sealing structure between the frame plate 410 and the case cover 130, in addition to the sealing between the frame plate 410 and the case body 140, sealing performance between the first accommodation cavity 110 and the second accommodation cavity 120 is further improved, ensuring that the high-temperature media ejected by the battery cells in the first accommodation cavity 110 are prevented from entering the second accommodation cavity 120 and affect the BMS 300. Moreover, in this embodiment, the sealing member 500 is the sealant, and the first protruding portion 131 of the case cover 130 is inserted in the sealant, bonding the frame plate 410 and the case cover 130 to an integrated structure. That is, the case body 140, the case cover 130, and the frame plate 410 cooperatively form an integrated structure, improving overall consistency and structural strength of the battery pack.

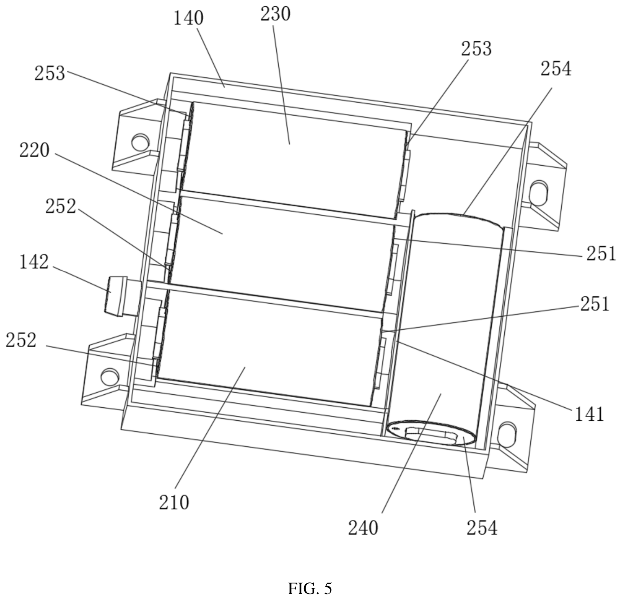

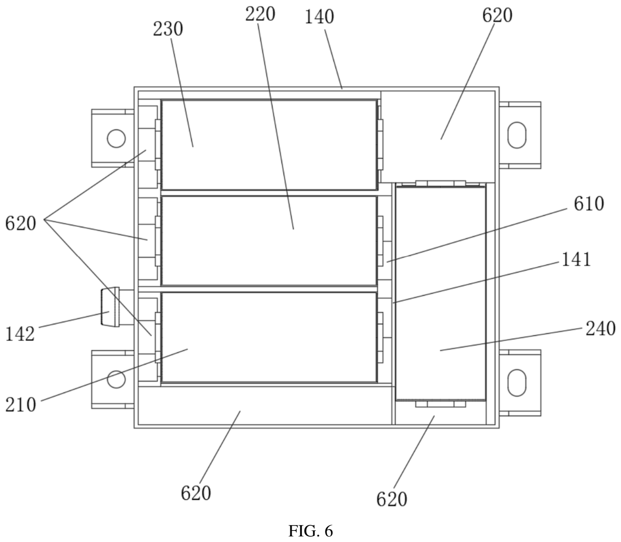

In some embodiments, as shown in FIGS. 5 and 6, a partition plate 141 is arranged in the case body 140. The battery cells are arranged on both sides of the partition plate 141. In other words, a first portion of the battery cells is arranged on one side of the partition plate 141, and a second portion of the battery cells is arranged on the other side of the partition plate 141. When a battery cell on one side of the partition plate 141 experiences the thermal runaway, the partition plate 141 can provide a certain thermal insulation effect, reducing a likelihood of thermal propagation.

In some embodiments, an axis of each of the battery cells arranged on one side of the partition plate 141 is non-parallel to an axis of each of the battery cells arranged on the other side of the partition plate 141. This configuration can be applied when the internal space of the case body 140 is limited or when other components need to be accommodated in the case body 140. In this embodiment, the axis of each of the battery cells arranged on one side of the partition plate 141 is perpendicular to the axis of each of the battery cells arranged on the other side of the partition plate 141, making an overall structure of the battery cell assembly 200 more regular and facilitating improving utilization of the internal space of the case body 140. Of course, in other embodiments, the axis of the each of the battery cells arranged on one side of the partition plate 141 and the axis of the each of the battery cells arranged on the other side of the partition plate 141 may also be arranged at an angle relative to each other.

In some embodiments, a side of each of the battery cells arranged on at least one side of the partition plate 141 facing the partition plate 141 is arranged with a first explosion-proof valve 251. When the first explosion-proof valve 251 of the battery cell arranged on one side of the partition plate 141 opens, and the high-temperature media is ejected, the partition plate 141 can effectively block the high-temperature media, preventing the high-temperature media from being dispersed to the battery cell arranged on the other side of the partition plate 141, thereby further reducing the likelihood of thermal propagation.

It should be noted that in other embodiments, when the axis of the each of the battery cells arranged on one side of the partition plate 141 is parallel to the axis of the each of the battery cells arranged on the other side of the partition plate 141, a side of each battery cell arranged on each of two sides of the partition plate 141 facing the partition plate 141 is arranged with the first explosion-proof valve 251.

In some embodiments, a first gap 610 is defined between the first explosion-proof valve 251 and the partition plate 141, and a second gap 620 is defined between each battery cell and the inner wall of the case body 140. Each of two sides of the partition plate 141 is spaced apart from the inner wall of the case body 140. In this way, the first gap 610 and the second gap 620 are communicated to each other and cooperatively form an exhaust channel. The case body 140 is arranged with a fifth explosion-proof valve 142, and the exhaust channel is connected to the fifth explosion-proof valve 142. When one or several battery cells experience the thermal runaway and the high-temperature media is ejected, the high-temperature media can flow through the exhaust channel to the fifth explosion-proof valve 142 and be discharged to the first accommodation cavity 110 from the fifth explosion-proof valve 142, reducing a likelihood of explosion of the battery pack and improving safety of the battery pack.

In some embodiments, each of two sides of each battery cell is arranged with an explosion-proof valve to achieve rapid exhaust.

In this embodiment, three battery cells are arranged on one side of the partition plate 141, and one battery cell is arranged on the other side of the partition plate 141. For ease of understanding, the three battery cells on one side of the partition plate 141 are referred to as the first battery cell 210, the second battery cell 220, and the third battery cell 230, respectively, and the battery cell on the other side of the partition plate 141 is referred to as the fourth battery cell 240. Particularly, each of the first battery cell 210, the second battery cell 220, and the fourth battery cell 240 is arranged face to the partition plate 141, while the third battery cell 230 is arranged offset from the partition plate 141. A side of each of the first battery cell 210 and the second battery cell 220 facing the partition plate 141 is arranged with a first explosion-proof valve 251, and a first gap 610 is defined between the first explosion-proof valve 251 and the partition plate 141. A side of each of the first battery cell 210 and the second battery cell 220 facing away from the partition plate 141 is arranged with a second explosion-proof valve 252. Each of two sides of the third battery cell 230 is arranged with a third explosion-proof valve 253, and each of two sides of the fourth battery cell 240 is arranged with a fourth explosion-proof valve 254. Each of the second explosion-proof valve 252, the third explosion-proof valve 253, and the fourth explosion-proof valve 254 and the inner wall of the case body 140 cooperatively define a second gap 620, thereby forming an exhaust channel in the case body 140 (i.e., in the first accommodation cavity 110).

The invention further provides a method for assembling the battery pack for assembling the aforementioned battery pack, which has effects of reducing assembly difficulty and improving assembly efficiency.

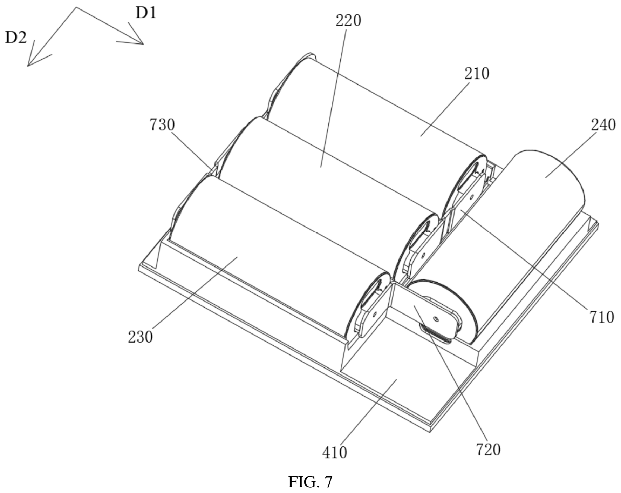

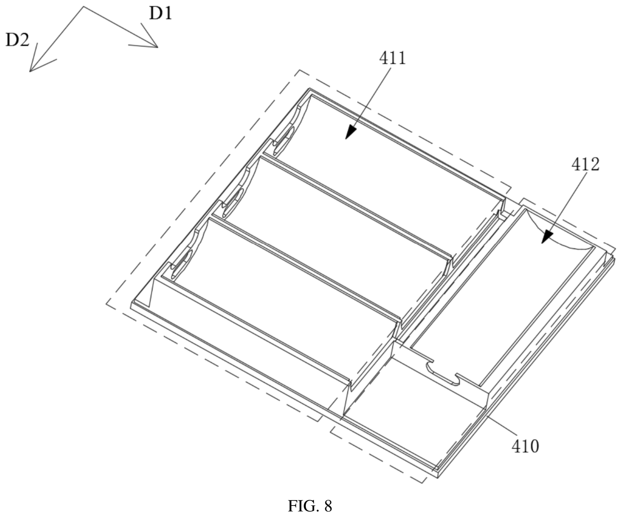

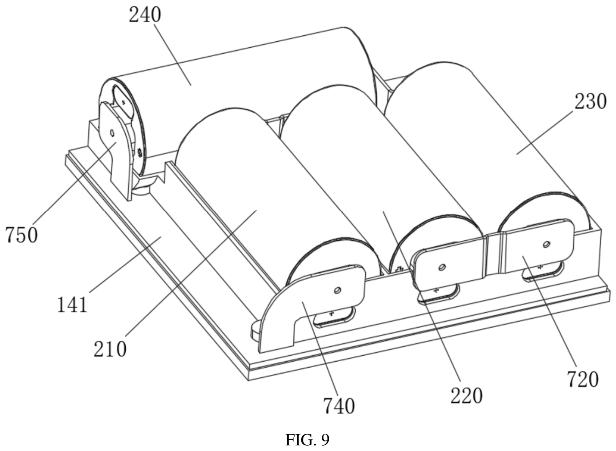

Specifically, as shown in FIGS. 7-9, the method for assembling the battery pack includes the following operations S1-S4.

In the operation S1, a frame plate 410 is provided. Specifically, the frame plate 410 defines a first region 411 and a second region 412 along a first direction D1. A first battery cell 210 and a second battery cell 220 are fixed in the first region 411 along a second direction D2. Specifically, each of an axis of the first battery cell 210 and an axis of the second battery cell 220 is parallel to the first direction D1, and the first direction D1 is perpendicular to the second direction D2.

In the operation S2, an electrode of the first battery cell 210 facing the second region 412 is welded to a first connection piece 710, and an electrode of the second battery cell 220 facing the second region 412 is welded to the first connection piece 710.

In the operation S3, a fourth battery cell 240 is fixed in the second region 412. Specifically, an axis of the fourth battery cell 240 is parallel to the second direction D2, and the fourth battery cell 240 faces to the first connection piece 710.

In the operation S4, the frame plate 410 is mounted in the case body 140. Specifically, the first region 411 and the second region 412 are located on two sides of the partition plate 141 respectively, and the frame plate 410 and the case body 140 cooperatively define a first accommodation cavity 110.

In the method for assembling the battery pack, the first connection piece 710 is welded to the electrode of the first battery cell 210 facing the second region 412 and welded to the electrode of the second battery cell 220 before the fourth battery cell 240 is fixed to the frame plate 410. Compared to fixing the fourth battery cell 240 to the frame plate 410 before welding the first connection piece 710, this method reduces difficulty of welding the first connection piece 710 to the first battery cell 210 and the second battery cell 220, thereby improving the assembly efficiency of the battery pack.

In some embodiments, in the operation S1, the following operation is further included. A third battery cell 230 is fixed in the first region 411. Specifically, the third battery cell 230 is located on a side of the second battery cell 220 facing away from the first battery cell 210, and an axis of the third battery cell 230 is parallel to the first direction D1.

In the operation S2, the following operation is further included. An electrode of the third battery cell 230 facing the second region 412 is welded to a second connection piece 720. The second connection piece 720 is an L-shaped connection piece.

In the operation S3, the following operation is further included. An electrode of the fourth battery cell 240 facing the second connection piece 720 is welded to the second connection piece 720.

After the second connection piece 720 is welded to the electrode of the third battery cell 230 facing the second region 412, the fourth battery cell 240 is fixed to the frame plate 410, and then the electrode of the fourth battery cell 240 facing the second connection piece 720 is welded to the second connection piece 720. This design facilitates quickly determining a fixed position of the fourth battery cell 240 on the frame plate 410, further improving assembly efficiency. Moreover, compared to fixing the fourth battery cell 240 to the frame plate 410 before welding the second connection piece 720, this design reduces a risk of weakened welding strength between the second connection piece 720 and each of the third battery cell 230 and the fourth battery cell 240 due to excessive positional deviation between the third battery cell 230 and the fourth battery cell 240.

In some embodiments, in the operation S2, the following operation is further included. An electrode of the second battery cell 220 facing away from the second region 412 is welded to a third connection piece 730, an electrode of the third battery cell 230 facing away from the second region 412 is welded to the third connection piece 730, a fourth connection piece 740 is arranged on a side of the first region 411 away from the second region 412, and an electrode of the first battery cell 210 facing away from the second region 412 is welded to the fourth connection piece 740. In the second region 412, a fifth connection piece 750 is arranged to pass through the frame plate 410, and the fifth connection piece 750 and the second connection piece 720 are arranged opposite to each other.

In the operation S3, the following operation is further included. The fourth battery cell 240 is fixed between the second connection piece 720 and the fifth connection piece 750, and an electrode of the fourth battery cell 240 facing the fifth connection piece 750 is welded to the fifth connection piece 750. In other words, after connecting all other battery cells and connection pieces to the frame plate 410, the fourth battery cell 240 is fixed to the frame plate 410.

In some embodiments, in the operation S4, the following operation is further included. A fixing adhesive is applied to a bottom portion of the case body 140, then the frame plate 410 is mounted in the case body 140. Each of the first battery cell 210, the second battery cell 220, the third battery cell 230, and the fourth battery cell 240 is bonded to the bottom portion of the case body 140 through the fixing adhesive, with each of the first battery cell 210, the second battery cell 220, and the third battery cell 230 located on a same side of the partition plate 141, and the fourth battery cell 240 located on the other side of the partition plate 141.

The method for assembling the battery pack further includes an operation S5. In the operation S5, a sealant is filled between the second protruding portion 413 and the inner wall of the case body 140 to achieve sealing between the frame plate 410 and the case body 140.

The method for assembling the battery pack further includes an operation S6. In the operation S6, a case cover 130 fixed with the BMS 300 is engaged to the case body 140, with the first protruding portion 131 inserted in the sealant to achieve the sealing between the frame plate 410 and the case cover 130, and forming the second accommodation cavity 120 between the frame plate 410 and the case cover 130.

As shown in FIG. 1, the method for assembling the battery pack further includes operation S7. In the operation S7, a first conductive member 810 is passed through a first through hole 132 and the BMS 300 in sequence and is fixed to the fourth connection piece 740, and the fourth connection piece 740 is electrically connected to the BMS 300 via the first conductive member 810. A second conductive member 820 is passed through a second through hole 133 and the BMS 300 in sequence and is fixed to the fifth connection piece 750, and the fifth connection piece 750 is electrically connected to the BMS 300 via the second conductive member 820.

The method for assembling the battery pack further includes an operation S8. In the operation S8, a first sealing cover 830 is bonded to the case cover 130 at the first through hole 132 to block the first through hole 132, and a second sealing cover 840 is bonded to the case cover 130 at the second through hole 133 block the second through hole 133, thereby achieving sealing of the second accommodation cavity 120.

The present invention also provides an electrical device, which includes the aforementioned battery pack. When a battery cell in the battery pack experiences the thermal runaway and ejects high-temperature media, a likelihood of the BMS 300 being damaged is reduced, allowing the BMS 300 to send a thermal runaway fault signal to the user. Thus, the electrical device has high operational safety.

It should be noted that the electrical device may be a vehicle, mobile phone, portable device, laptop, ship, aircraft, electric toy, electric tool, etc.

Clearly, the above embodiments of the invention are only intended to clearly illustrate the invention and are not intended to limit the implementations of the invention. For those skilled in the art, various obvious changes, rearrangements, and substitutions can be made without departing from the scope of the invention. It is neither possible nor necessary to exhaust all implementations here. Any modifications, equivalent replacements, and improvements made within the spirit and principles of the invention shall be included within the scope of the claims of the invention.

## Claims

1. A battery pack, **characterized by** comprising:
a battery case (100), defining a first accommodation cavity (110) and a second accommodation cavity (120), wherein the first accommodation cavity (110) is isolated from the second accommodation cavity (120);
a battery cell assembly (200), arranged in the first accommodation cavity (110) and comprising battery cells; and
a battery monitoring and management system (BMS) (300), arranged in the second accommodation cavity (120).

2. The battery pack according to claim 1, further comprising a cells contact system (CCS) (400), wherein the CCS (400) comprises a frame plate (410), and the frame plate (410) is sealed in the battery case (100) and partitions the battery case (100) to form the first accommodation cavity (110) and the second accommodation cavity (120).

3. The battery pack according to claim 2, wherein the battery case (100) comprises a case cover (130) and a case body (140), the case cover (130) is engaged with the case body (140), the frame plate (410) is arranged in the case body (140), the first accommodation cavity (110) is located between the frame plate (410) and the case body (140), and the second accommodation cavity (120) is located between the frame plate (410) and the case cover (130).

4. The battery pack according to claim 3, wherein an edge of the frame plate (410) is arranged with a sealing member (500), and the frame plate (410) is sealingly connected with an inner wall of the case body (140) via the sealing member (500).

5. The battery pack according to claim 4, wherein the sealing member (500) extends along a circumferential direction of the frame plate (410) and is configured in a loop.

6. The battery pack according to any one of claims 4-5, wherein the sealing member (500) is a sealant.

7. The battery pack according to any one of claims 4-6, wherein a side of the case cover (130) facing the case body (140) is arranged with a first protruding portion (131), and the first protruding portion (131) is inserted in the sealing member (500).

8. The battery pack according to claim 7, wherein the first protruding portion (131) extends along a circumferential direction of the case cover (130) and is configured in a loop.

9. The battery pack according to any one of claims 3-8, wherein a partition plate (141) is arranged in the case body (140), and the battery cells are arranged on both sides of the partition plate (141).

10. The battery pack according to claim 9, wherein a side of each of the battery cells arranged on at least one side of the partition plate (141) facing the partition plate (141) is arranged with a first explosion-proof valve (251).

11. The battery pack according to claim 10, wherein a first gap (610) is defined between the first explosion-proof valve (251) and the partition plate (141), a second gap (620) is defined between each of the battery cells and the inner wall of the case body (140), each of two sides of the partition plate (141) is spaced apart from the inner wall of the case body (140), and the first gap (610) and the second gap (620) are communicated to each other and cooperatively form an exhaust channel.

12. The battery pack according to claim 11, wherein the case body (140) is arranged with a fifth explosion-proof valve (142), and the exhaust channel is communicated to the fifth explosion-proof valve (142).

13. The battery pack according to any one of claims 9-12, wherein an axis of each of the battery cells arranged on one side of the partition plate (141) is non-parallel to an axis of each of the battery cells arranged on the other side of the partition plate (141).

14. A method for assembling the battery pack according to claim 13, comprising:
S1: providing the frame plate (410), wherein the frame plate (410) defines a first region (411) and a second region (412) along a first direction (D1); and fixing a first battery cell (210) and a second battery cell (220) in the first region (411) along a second direction (D2), wherein each of an axis of the first battery cell (210) and an axis of the second battery cell (220) is parallel to the first direction (D1), and the first direction (D1) is perpendicular to the second direction (D2);
S2: welding an electrode of the first battery cell (210) facing the second region (412) to a first connection piece (710), and welding an electrode of the second battery cell (220) facing the second region (412) to the first connection piece (710);
S3: fixing a fourth battery cell (240) in the second region (412), wherein an axis of the fourth battery cell (240) is parallel to the second direction (D2), and the fourth battery cell (240) faces to the first connection piece (710); and
S4: mounting the frame plate (410) in the case body (140), wherein the first region (411) and the second region (412) are located on two sides of the partition plate (141), respectively.

15. An electrical device, **characterized by** comprising the battery pack according to any one of claims 1-13.
